# EUROPÄISCHE PATENTSCHRIFT

(11) **EP 3 585 627 B1**
(45) Veröffentlichungstag und Bekanntmachung des Hinweises auf die Patenterteilung: **16.12.2020**
(21) Anmeldenummer: 18701418.8
(22) Anmeldetag: 15.01.2018
(51) Int. Cl.: B60C 11/13, B60C 11/03

(54) **FAHRZEUGLUFTREIFEN**
PNEUMATIC VEHICLE TYRE
PNEUMATIQUE DE VÉHICULE

(30) Priorität: 24.02.2017 DE 102017203011
(43) Veröffentlichungstag der Anmeldung: 01.01.2020
(73) Patentinhaber: Continental Reifen Deutschland GmbH, 30165 Hannover (DE)
(72) Erfinder: NAGLATZKI, Paul, 30159 Hannover (DE); KRISTEN, Florian, 30171 Hannover (DE); MEINERS, Christian, 30459 Hannover (DE); LIPPERT, Frank, 31275 Lehrte (DE)
(74) Vertreter: Finger, Karsten
(86) Internationale Anmeldenummer: PCT/EP2018/050804
(87) Internationale Veröffentlichungsnummer: WO 2018/153570

(56) Entgegenhaltungen:
- EP-A1- 1 950 060
- EP-A1- 2 447 092
- EP-A1- 2 666 648
- WO-A1-2007/099085
- DE-A1-102010 001 898
- DE-A1-102011 076 813
- JP-U- S5 675 004
- US-A1- 2009 320 982
- US-A1- 2014 367 013

## Beschreibung

Die Erfindung betrifft einen Fahrzeugluftreifen, insbesondere Nutzfahrzeugreifen, mit einem Laufstreifen mit zwei schulterseitigen Profilrippen, welche jeweils durch eine breite und auf Profiltiefe ausgeführte, in Umfangsrichtung gerade umlaufende Umfangsrille von einem zentralen Laufstreifenbereich getrennt sind, wobei die Umfangsrille einen gerundeten Rillengrund aufweist und an der jeweiligen schulterseitigen Profilrippe von einer Rippenflanke begrenzt ist, wobei an der Rippenflanke der Umfangsrille bei der Profilrippenperipherie Ausnehmungen ausgebildet sind, welche in Richtung der Erstreckung der Umfangsrille eine Erstreckungslänge von maximal 30 mm und jeweils in Draufsicht L-förmig zueinander verlaufende und sich in radialer Richtung erstreckende Begrenzungsflächen und eine Bodenfläche aufweisen, wobei, in Draufsicht betrachtet, die erste Begrenzungsfläche unter einem Winkel von bis zu 35° zur axialer Richtung in die Profilrippe hinein verläuft und die zweite Begrenzungsfläche unter einem Winkel von 90° bis 125° zur erstgenannten Begrenzungsfläche verläuft.

Nutzfahrzeugreifen mit derartigen Profilausgestaltungen sind in unterschiedlichen Varianten bekannt. Im zentralen Laufstreifenbereich können weitere Umfangsrillen, welche Profilrippen voneinander trennen, verlaufen. Der zentrale Laufstreifenbereich kann ferner mit einer Blockstruktur, beispielsweise mit zwei oder drei Blockreihen, strukturiert sein, es kann auch eine Kombination von Profilrippen und Blöcken im zentralen Laufstreifenbereich vorgesehen sein. Nutzfahrzeugreifen mit derart ausgestalteten Laufstreifen haben sich vor allem an nachlaufenden Achspositionen von Nutzfahrzeugen oder an Positionen von Nutzfahrzeugen bewährt, an welchen relativ geringe laterale Bewegungen stattfinden. Ein gewisser Nachteil von derart umfangsorientiert ausgeführten Laufstreifen mit Profilrippen an Reifenschultern und mit an diese angrenzenden breiten Umfangsrillen ist die geringe Traktion in Folge nicht vorhandener Eingriffskanten.

Ein Fahrzeugluftreifen der eingangs genannten Art ist beispielsweise aus der EP 2 447 092 A1 bekannt. Der Laufstreifen dieses Reifens weist zwei blockartig strukturierte schulterseitige Profilrippen auf, an deren Rippenflanken an der Profilrippenperipherie Ausnehmungen ausgebildet sind. Die Ausnehmungen weisen jeweils eine als Schrägfläche ausgebildete Bodenfläche und in Draufsicht L-förmig zueinander verlaufende, sich in radialer Richtung erstreckende Begrenzungsflächen auf, wobei die Begrenzungsflächen miteinander einen Winkel von 90° einschließen. In Sicht auf die jeweilige Rippenflanke betrachtet, weisen die hintereinander ausgebildeten Ausnehmungen ein sägezahnartiges Profil auf. Die Erstreckungslänge der Ausnehmungen in Richtung der Erstreckung der Umfangsrille beträgt beispielsweise 5 mm.

Aus der WO 2007 099 085 A1 ist ein Fahrzeugluftreifen mit einem Laufstreifen mit zwei mittleren Profilrippen bekannt, welche jeweils von in Draufsicht asymmetrisch und langgezogen Z-förmig verlaufenden Einschnitten durchquert sind. Solche Einschnitte sollen gute Griffeigenschaften auf nassen und auf schneebedeckten Fahrbahnen ermöglichen, ohne dass die Fahreigenschaften auf trockener Fahrbahn verschlechtert werden.

Der Erfindung liegt die Aufgabe zugrunde, konstruktive Maßnahmen zu treffen, mittels welcher sich die Traktionsperformance eines Reifens mit einem Laufstreifen mit Profilrippen in den Schulterbereichen verbessern lässt.

Gelöst wird die gestellte Aufgabe erfindungsgemäß dadurch, dass die Erstreckungslänge der Ausnehmungen 70 % bis 90 % der Profiltiefe beträgt, sich die Bodenfläche der Ausnehmungen in einer Tiefe von 15% bis 25% der Profiltiefe befindet und wobei zwischen der Rippenflanke und der zweiten Begrenzungsfläche der Ausnehmung eine in radialer Richtung verlaufende Übergangsfläche vorhanden ist, welche in Draufsicht in axialer Richtung oder unter einem spitzen Winkel von bis zu 45° zur axialen Richtung verläuft und welche in axialer Richtung eine Breite von mindestens 1,0 mm aufweist.

Insbesondere die in axialer Richtung verlaufenden Begrenzungsflächen der Ausnehmungen stellen an der Profilrippenperipherie sehr wirksame Traktionskanten zur Verfügung. Durch die zweiten, nahezu in Umfangsrichtung verlaufenden Begrenzungsflächen sowie die in einer relativ geringen Tiefe befindlichen Bodenflächen werden die Profilrippen gleichzeitig gut stabilisiert, so dass das Entstehen von Einrissen im Bereich der Ausnehmungen weitgehend vermieden wird.

Bei einer bevorzugten Ausführungsform der Erfindung setzt sich die Rippenflanke in Umfangsrichtung aus Flankenabschnitten zusammen, die zur Umfangsrichtung unter einem spitzen Winkel von 1° bis 3° verlaufen, wobei die Flankenabschnitte über Rücksprünge miteinander verbunden sind, welche jeweils von der ersten Begrenzungsfläche der Ausnehmungen mitgebildet sind. Ein vorteilhafter Effekt dieser zur Umfangsrichtung unter einem kleinen spitzen Winkel verlaufenden Flankenabschnitte ist deren Beitrag zur Traktion.

Ein weiterer Vorteil dieser über Rücksprünge verbundenen Flankenabschnitte besteht darin, dass die erste Begrenzungsfläche in radialer Richtung entlang des Rücksprunges als langestreckte Dreiecksfläche bis zum Beginn des Rillengrundes ausgebildet werden kann. Auch bei größerem Abrieb des Laufstreifens bleibt daher im Bereich des Rücksprunges immer eine Traktionskante vorhanden.

In einer bevorzugten Ausführungsform weist der Fahrzeugluftreifen im zentralen Laufstreifenbereich Profilblöcke auf, die gemäß einem Verfahren der Pitchlängenvariation ausgestaltet sind und in Umfangsrichtung entsprechend aufeinander folgen, wobei jedem Pitch ein Flankenabschnitt der Rippenflanke zugeordnet: ist. Diese Anordnung der Flankenabschnitte gemäß der im mittleren Laufstreifenbereich vorgesehenen Pitchlängenvariation ist für das Reifen/Fahrbahngeräusch ebenfalls vorteilhaft.

Bei einer weiteren. bevorzugten Ausführungsvariante der Erfindung beträgt die Breite der Übergangsfläche 1,0 mm bis 3,0 mm. Diese schmale Übergangsfläche ist für die Stabilität der Rippenflanke in diesem Bereich von Vorteil.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf einen Umfangsabschnitt eines Ausführungsbeispiels eines Laufstreifens eines erfindungsgemäßen Fahrzeugluftreifens,
Fig. 2 eine Ansicht eines Umfangsabschnittes einer Profilrippenflanke und
Fig. 3 eine Vorderansicht eines Umfangsabschnitt einer Umfangsrille mit Sicht auf die Profilrippenflanke.

Erfindungsgemäß ausgeführte Fahrzeugluftreifen sind insbesondere Off-The-Road-Reifen oder Nutzfahrzeugreifen für unterschiedlichste Einsatzzwecke, vorzugsweise groß dimensionierte Nutzfahrzeugreifen für Felgendurchmesser von mindestens 24 Zoll. Solche Reifen sind beispielsweise Reifen für Portalhubwagen, Reachstacker oder Containerstapler. Erfindungsgemäß ausgeführte Reifen weisen eine ein-oder mehrlagige Karkasse, entweder als Radialkarkasse oder als Diagonalkarkasse, und einen mehrlagigen Gürtelverband oder mehrere Breakerlagen auf.

Der in den Figuren gezeigte profilierte Laufstreifen weist schulterseitig je eine Profilrippe 1 auf, die jeweils von einer breiten, in Umfangsrichtung umlaufenden Umfangsrille 2 von einem zentralen Laufstreifenbereich 3 getrennt sind. Die Profilrippen 1 weisen keine oder weitgehend keine Profilstrukturen, wie Querrillen oder Einschnitte, auf und besitzen eine Breite bi von 20% bis 30% der Bodenaufstandsflächenbreite B. Die Bodenaufstandsflächenbreite B entspricht dabei dem in axialer Richtung ermittelten Abstand der beiden äußeren Randkanten 1a der Profilrippen 1.

Bei der dargestellten Ausführung weist der Laufstreifen im zentralen Laufstreifenbereich 3 eine Blockstruktur mit Profilblöcken 3a auf, die durch Querrillen 4 und unter einem kleinen spitzen Winkel zur Umfangsrichtung verlaufende Schrägrillen 5 voneinander getrennt sind. Nachdem die Blockstruktur im zentralen Laufstreifenbereich 3 nicht Gegenstand der Erfindung ist wird auf ihre Ausgestaltung im Detail nicht eingegangen. Der zentrale Laufstreifenbereich 3 ist nach einem Verfahren der Pitchlängenvariation ausgelegt, wobei jedes Pitch ein Paar der nebeneinander befindlichen Profiblöcke 3a im zentralen Laufstreifenbereich 3 mitsamt jeweils einer der an diese in Umfangsrichtung anschließenden Querrille 4 umfasst. Wie an sich bekannt und üblich werden solche Pitches in unterschiedlichen Umfangslängen, beispielsweise in zwei bis drei unterschiedlichen Umfangslängen, vorgesehen, um derart das Reifen/Fahrbahngeräusch günstig zu beeinflussen bzw. zu vermindern.

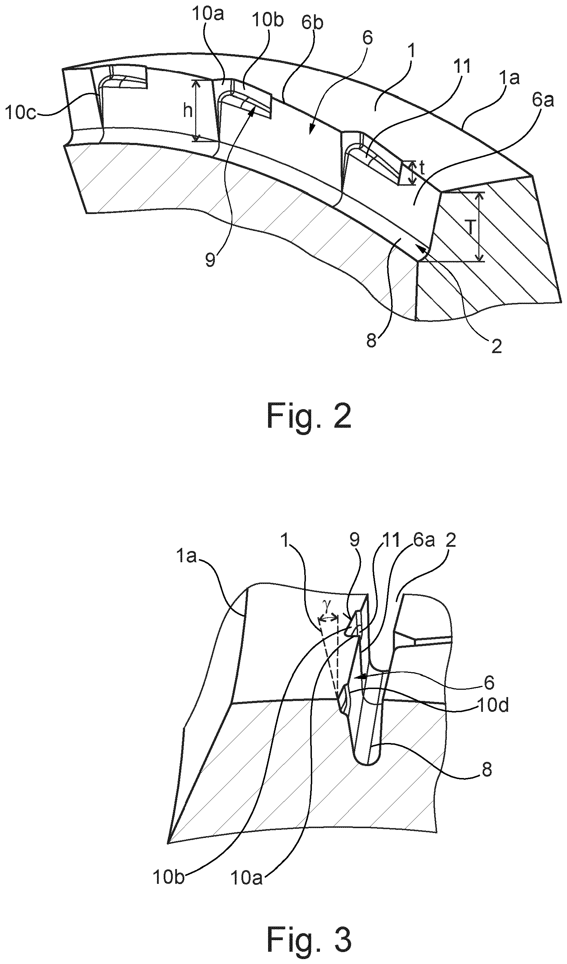

Zumindest die Umfangsrillen 2 weisen eine Tiefe auf, die der vorgesehenen Profiltiefe T (Fig. 2) entspricht, die bei Nutzfahrzeugreifen je nach deren Reifendimension und Einsatzzweck in einen weiten Bereich variieren kann, beispielsweise 12 mm bis 95 mm betragen kann.

Wie beispielsweise Fig. 3 zeigt, ist jede Umfangsrille 2 an der Profilrippe 1 von einer Rippenflanke 6 begrenzt, gegenüber der Rippenflanke 6 von in Umfangsrichtung aufeinander folgenden Blockflanken 7. Die Rippenflanke 6 und die Blockflanken 7 sind über einen Rillengrund 8 miteinander verbunden, welcher bei der gezeigten Ausführung und wie es bei Umfangsrillen üblich ist, gerundet ausgeführt ist. Bei der gezeigten Ausführung setzt sich ferner die Rippenflanke 6 in Umfangsrichtung aus Flankenabschnitten 6a zusammen, deren Randkanten 6b zur Umfangsrichtung unter einem für alle Flankenabschnitten 6a zumindest weitgehend gleich großen spitzen Winkel α von 1° bis 3° verlaufen. Bei der gezeigten Ausführung ist jedem Pitch im zentralen Laufstreifenbereich 3 ein Flankenabschnitt 6a zugeordnet. In Draufsicht betrachtet, liegen die laufstreifeninneren Endpunkte der Flankenabschnitte 6a jeweils auf derselben in Umfangsrichtung umlaufenden Geraden. Analoges gilt für die laufstreifenäußeren Endpunkte der Flankenabschnitte 6a. Zwischen den in Umfangrichtung aufeinander folgenden Flankenabschnitten 6a ist daher eine kleine Nase bzw. ein kurzer Rücksprung in den Randkanten 6b vorhanden.

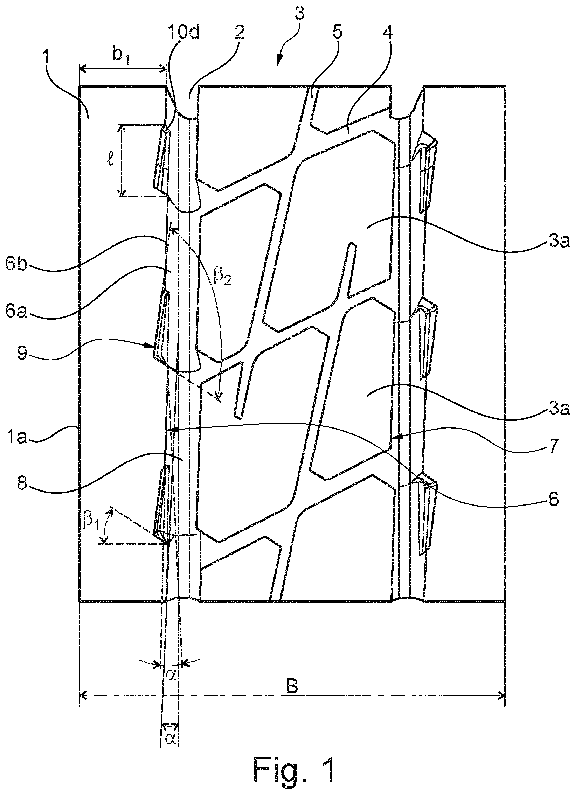

An jeder Rippenflanke 6 sind, bei der Profilrippenperipherie, in die Profilrippe 1 hineinragende, in Draufsicht L-förmige Ausnehmungen 9 ausgebildet. Die Ausnehmungen 9 befinden sich an den Endabschnitten der Flankenabschnitte 6a und enden daher an den Rücksprüngen. Die hauptsächlichen Begrenzungsflächen jeder Ausnehmung 9 sind in Draufsicht L-förmig zueinander verlaufende und sich in radialer Richtung erstreckende Begrenzungsflächen 10a, 10b und eine Bodenfläche 11, die in Draufsicht im Wesentlichen die Gestalt eines langgestreckten Dreieckes aufweist. Die Begrenzungsfläche 10a verläuft, den Rücksprung mitbildend, von der Rippenflanke 6 ausgehend in Draufsicht unter einem Winkel β₁ von 0° bis 35° zur axialen Richtung, die Begrenzungsfläche 10b, die an die Begrenzungsfläche 10a anschließt, verläuft unter einem Winkel β₂ zur Begrenzungsfläche 10a, welcher 90° bis 125° beträgt. Die Begrenzungsfläche 10b endet an einer schmalen Übergangsfläche 10d zur Rippenflanke 6. Die beiden Begrenzungsflächen 10a, 10b verlaufen ferner in radialer Richtung bzw. zur radialen Richtung unter einem kleinen spitzen Winkel γ (Fig. 3) von bis zu 10°. Die Übergangsfläche 10d verläuft in radialer Richtung bis zur Bodenfläche 11, in Draufsicht in axialer Richtung und weist in axialer Richtung eine Breite von wenigen mm, insbesondere 1,0 mm bis 3,0 mm auf. Die Erstreckungslänge 1 (Fig. 1) der Ausnehmung 9 an der Laufstreifenperipherie beträgt 70 % bis 90 % der Profiltiefe T, jedoch maximal 30 mm. Die Bodenfläche 11 befindet sich in einer Tiefe t (Fig. 2) von 15% bis 25% der Profiltiefe T und geht über Übergangsrundungen in die Begrenzungsflächen 10a, 10d über. Bei der gezeigten, bevorzugten Ausführung ist ferner auch das Inneneck zwischen den beiden Begrenzungsflächen 10a, 10b gerundet ausgeführt.

Am Rücksprung zwischen den Flankenabschnitten 6a ist die Begrenzungsfläche 10a in radialer Richtung als langgestreckte schmale Dreieckfläche 10c (Fig. 2) bis zum Rillengrund 8 fortgesetzt. Die in radialer Richtung ermittelte Höhe h (Fig. 2) zwischen dem spitzwinkeligen Ende der Dreieckfläche 10c und der Profilrippenperipherie beträgt daher 70% bis 90% der Profiltiefe T.

### Bezugszeichenliste

- 1 .......................: Profilrippe
- 1a .....................: Randkante
- 2 .......................: Umfangsrille
- 3 .......................: Laufstreifenbereich
- 3a .....................: Profilblock
- 4 .......................: Querrille
- 5 .......................: Schrägrille
- 6 .......................: Rippenflanke
- 6a .....................: Flankenabschnitt
- 6b .....................: Randkante
- 7 .......................: Blockflanke
- 8 .......................: Rillengrund
- 9 .......................: Ausnehmung
- 10a, 10b ...........: Begrenzungsfläche
- 10c ...................: Dreieckfläche
- 10d ...................: Übergangsfläche
- 11 .....................: Bodenfläche
- B ......................: Bodenaufstandsflächenbreite
- T .......................: Profiltiefe
- b₁ ......................: Breite
- h .......................: Höhe
- l ........................: Länge
- t ........................: Tiefe
- α, β₁, β₂ ............: Winkel

## Patentansprüche

1. Fahrzeugluftreifen, insbesondere Nutzfahrzeugreifen, mit einem Laufstreifen mit zwei schulterseitigen Profilrippen (1), welche jeweils durch eine breite und auf Profiltiefe (T) ausgeführte, in Umfangsrichtung gerade umlaufende Umfangsrille (2) von einem zentralen Laufstreifenbereich (3) getrennt sind, wobei die Umfangsrille (2) einen gerundeten Rillengrund (8) aufweist und an der jeweiligen schulterseitigen Profilrippe (1) von einer Rippenflanke (6) begrenzt ist,
wobei an der Rippenflanke (6) der Umfangsrille (2) bei der Profilrippenperipherie Ausnehmungen (9) ausgebildet sind, welche in Richtung der Erstreckung der Umfangsrille (2) eine Erstreckungslänge (1) von maximal 30 mm und jeweils in Draufsicht L-förmig zueinander verlaufende und sich in radialer Richtung erstreckende Begrenzungsflächen (10a, 10b) und eine Bodenfläche (11) aufweisen, wobei, in Draufsicht betrachtet, die erste Begrenzungsfläche (10a) unter einem Winkel (ßi) von bis zu 35° zur axialer Richtung in die Profilrippe (1) hinein verläuft und die zweite Begrenzungsfläche (10b) unter einem Winkel (β₂) von 90° bis 125° zur erstgenannten Begrenzungsfläche (10a) verläuft,
**dadurch gekennzeichnet,**
**dass** die Erstreckungslänge (l) der Ausnehmungen (9) 70 % bis 90 % der Profiltiefe (T) beträgt, sich die Bodenfläche (11) der Ausnehmungen (9) in einer Tiefe (t) von 15% bis 25% der Profiltiefe (T) befindet und wobei zwischen der Rippenflanke (6) und der zweiten Begrenzungsfläche (10b) der Ausnehmung (9) eine in radialer Richtung verlaufende Übergangsfläche (10d) vorhanden ist, welche in Draufsicht in axialer Richtung oder unter einem spitzen Winkel von bis zu 45° zur axialen Richtung verläuft und welche in axialer Richtung eine Breite von mindestens 1,0 mm aufweist.

2. Fahrzeugluftreifen nach Anspruch 1, **dadurch gekennzeichnet, dass** sich die Rippenflanke (6) in Umfangsrichtung aus Flankenabschnitten (6a) zusammensetzt, die zur Umfangsrichtung unter einem spitzen Winkel (a) von 1° bis 3° verlaufen, wobei die Flankenabschnitte (6a) über Rücksprünge miteinander verbunden sind, welche jeweils von der ersten Begrenzungsfläche (10a) der Ausnehmungen (10) mitgebildet sind.

3. Fahrzeugluftreifen nach Anspruch 2, **dadurch gekennzeichnet, dass** die erste Begrenzungsfläche (10a) in radialer Richtung entlang des Rücksprunges als langgestreckte Dreiecksfläche (10c) bis zum Beginn des Rillengrundes (8) fortgesetzt ist.

4. Fahrzeugluftreifen nach Anspruch 2 oder 3, welcher im zentralen Laufstreifenbereich (3) Profilblöcke (3a) aufweist, die gemäß einem Verfahren der Pitchlängenvariation ausgestaltet in Umfangsrichtung aufeinander folgen, **dadurch gekennzeichnet, dass** jedem Pitch ein Flankenabschnitt (6a) der Rippenflanke (6) zugeordnet ist.

5. Fahrzeugluftreifen, nach Ansprüche 1 bis 4, **dadurch gekennzeichnet, dass** die Breite der Übergangsfläche (10d) 1,0 mm bis 3,0 mm beträgt.

## Claims

1. Pneumatic vehicle tyre, in particular commercial vehicle tyre, having a tread having two shoulder-side profile ribs (1) which are each separated from a central tread region (3) by a wide circumferential groove (2) which is made to profile depth (T) and which runs around rectilinearly in the circumferential direction, wherein the circumferential groove (2) has a rounded groove base (8) and is delimited at the respective shoulder-side profile rib (1) by a rib flank (6),
wherein recesses (9) are formed on the rib flank (6) of the circumferential groove (2) at the profile rib periphery, which recesses have, in the direction of extent of the circumferential groove (2), a length of extent (1) of at most 30 mmm and in each case have, as seen in plan view, boundary surfaces (10a, 10b) which run towards one another in an L shape and extend in the radial direction, and a bottom surface (11), wherein, as seen in plan view, the first boundary surface (10a) runs into the profile rib (1) at an angle (β₁) of up to 35° to the axial direction, and the second boundary surface (10b) runs at an angle ((β₂) of 90° to 125° to the first-mentioned boundary surface (10a),
**characterized**
**in that** the length of extent (1) of the recesses (9) is 70% to 90% of the profile depth (T), the bottom surface (11) of the recesses (9) is situated at a depth (t) of 15% to 25% of the profile depth (T), and wherein a transition surface (10d) running in the radial direction is present between the rib flank (6) and the second boundary surface (10b) of the recess (9), which transition surface, as seen in plan view, runs in the axial direction or at an acute angle of up to 45° to the axial direction, and which transition region has a width of at least 1.0 mm in the axial direction.

2. Pneumatic vehicle tyre according to Claim 1,
**characterized in that**, in the circumferential direction, the rib flank (6) is composed of flank portions (6a) which run at an acute angle (a) of 1° to 3° to the circumferential direction, wherein the flank portions (6a) are connected to one another via setbacks which are each concomitantly formed by the first boundary surface (10a) of the recesses (10).

3. Pneumatic vehicle tyre according to Claim 2,
**characterized in that** the first boundary surface (10a) is continued in the radial direction along the setback as an elongate triangular surface (10c) to the start of the groove base (8).

4. Pneumatic vehicle tyre according to Claim 2 or 3 which has, in the central tread region (3), profile blocks (3a) which, designed according to a method of pitch length variation, follow one another in the circumferential direction, **characterized in that** each pitch is assigned a flank portion (6a) of the rib flank (6).

5. Pneumatic vehicle tyre according to Claims 1 to 4,
**characterized in that** the width of the transition surface (10d) is from 1.0 mm to 3.0 mm.

## Revendications

1. Bandage pneumatique pour roue de véhicule, notamment véhicule utilitaire, avec une bande de roulement présentant deux nervures profilées (1) situées du côté des épaulements, séparées chacune d'une partie centrale (3) de la bande de roulement par une large rainure périphérique (2) rectiligne dans la direction périphérique et de même profondeur (T) que le profil, la rainure périphérique (2) présentant un fond de rainure (8) arrondi et étant délimitée par le flanc de nervure (6) de chacune des nervures profilées (1) situées du côté des épaulements,
des découpes (9) étant formées à la périphérie des nervures profilées sur le flanc de nervure (6) de la rainure périphérique (2) et présentant dans la direction de l'extension de la rainure périphérique (2) une longueur (l) d'au plus 30 mm, des surfaces frontières (10a, 10b) formant l'une avec l'autre un L dans une vue en plan et s'étendant dans la direction radiale ainsi qu'une surface de fond (11), tandis que dans une vue en plan, la première surface frontière (10a) s'étend dans la nervure profilée (1) sous un angle (β₁) d'au plus 35° par rapport à la direction axiale et la deuxième surface frontière (10b) s'étend sous un angle (β₂) de 90° à 125° par rapport à ladite première surface frontière (10a), **caractérisé en ce que**
la longueur (l) de l'extension des découpes (9) représente de 70 % à 90 % de la profondeur (T) du profil,
**en ce que** la surface de fond (11) des découpes (9) est située à un profondeur (T) qui représente entre 15 % et 25 % de la profondeur (T) du profil et
**en ce qu'**entre le flanc de nervure (6) et la deuxième surface frontière (10b) de la découpe (9) se trouver une surface de transition (10d) qui s'étend dans la direction radiale et qui, dans une vue en plan, s'étend dans la direction axiale ou sous un angle aigu d'au plus 45° par rapport à la direction axiale et présente dans la direction axiale une largeur d'au moins 1,0 mm.

2. Bandage pneumatique pour roue de véhicule selon la revendication 1, **caractérisé en ce que** dans la direction périphérique, le flanc de nervure (6) est composé de l'assemblage de sections de flanc (6a) qui forment un angle aigu (α) de 1° à 3° avec la direction périphérique et **en ce que** les sections de flanc (6a) sont reliées les unes aux autres par des retraits qui sont tous formés par la première surface frontière (10a) des découpes (10).

3. Bandage pneumatique pour roue de véhicule selon la revendication 2, **caractérisé en ce que** le long du retrait et dans la direction radiale, la première surface frontière (10a) se prolonge comme surface triangulaire allongée (10c) jusqu'au début du fond de rainure (8).

4. Bandage pneumatique pour roue de véhicule selon les revendications 2 ou 3, qui présente dans la partie centrale (3) de la bande de roulement des blocs profilés (3a) qui se suivent les uns les autres à un pas variable dans la direction périphérique, **caractérisé en ce qu'**à chaque pas est associé une section de flanc (6a) du flanc de nervure (6).

5. Bandage pneumatique pour roue de véhicule selon l'une des revendications 1 à 4, **caractérisé en ce que** la largeur de la surface de transition (10d) est de 1,0 mm à 3,0 mm.
